# EUROPEAN PATENT APPLICATION

(11) **EP 2 302 413 A1**
(43) Date of publication of application: **30.03.2011**
(21) Application number: 09770263.3
(22) Date of filing: 26.06.2009
(51) Int. Cl.: G01S 13/89, G01V 3/12

(54) **MILLIMETER WAVE IMAGE PICKUP DEVICE**

(30) Priority: 27.06.2008 JP 2008168865
(71) Applicant: Masprodenkoh Kabushikikaisha, Nisshin-shi, Aichi 470-0194 (JP); Chuo Electronics Co., Ltd., Hachioji-shi, Tokyo 192-0051 (JP); Tohoku University, Aoba-ku Sendai-shi Miyagi 980-8577 (JP)
(72) Inventor: UEMURA, Jun, Nisshin-shi Aichi 470-0194 (JP); TAKEDA, Masamune, Nisshin-shi Aichi 470-0194 (JP); TAKAHASHI Junichi, Nisshin-shi Aichi 470-0194 (JP); HASEGAWA, Tsuyoshi, Hachioji-shi Tokyo 192-0051 (JP); HIRAI, Haruyuki, Hachioji-shi Tokyo 192-0051 (JP); NIIKURA, Hirotaka, Hachioji-shi Tokyo 192-0051 (JP); MATSUZAKI, Tomohiko, Hachioji-shi Tokyo 192-0051 (JP); SATO, Hiroyasu, Sendai-shi Miyagi 980-8577 (JP); SAWAYA Kunio, Sendai-shi Miyagi 980-8577 (JP); MIZUNO, Koji, Sendai-shi Miyagi 980-8577 (JP)
(74) Representative: Roth, Klaus
(86) International application number: PCT/JP2009/061758
(87) International publication number: WO 2009/157553

(57) **Abstract**

A millimeter wave imaging apparatus includes: an imaging device having a plurality of millimeter wave sensors that are arranged in a planar manner and receive millimeter waves radiated from a subject to detect signal levels thereof; an image data generation device that generates image data of the subject based on an output from each of the millimeter wave sensors constituting the imaging device; and a case that has a placement surface on which the subject can be placed and which permits transmission of the millimeter waves. The imaging device is arranged below the placement surface of the case, so that the millimeter waves, which are radiated from a bottom part of the subject placed on the placement surface of the case, are received by the plurality of millimeter wave sensors.

## Description

### TECHNICAL FIELD

The present invention relates to a millimeter wave imaging apparatus that receives millimeter waves radiated from a subject such as a human body thereby to image the subject.

### BACKGROUND ART

Conventionally, it has been proposed to receive millimeter waves radiated from a subject such as a human body thereby to image the subject and detect a metallic or non-metallic weapon or smuggled goods hidden in the subject from the captured image (see, for example, Patent Documents 1, 2 and others).

A millimeter wave imaging apparatus used in the above proposal usually includes: a millimeter wave sensor array having a plurality of millimeter wave sensors arranged on an identical plane, and a lens that focuses millimeter waves radiated from a subject such as a human body to form a millimeter wave image on a millimeter wave receiving surface of the millimeter wave sensor array. The millimeter wave imaging apparatus is configured to receive signal levels of receiving signals from the respective millimeter wave sensors constituting the millimeter wave sensor array as pixel values of a subject image, thereby to capture the subject image.
Patent Document 1: Japanese Unexamined Patent Application Publication No. 2006-258496
Patent Document 2: Japanese Patent Publication No. 2788519

### DISCLOSURE OF THE INVENTION

### PROBLEMS TO BE SOLVED BY THE INVENTION

As above, the conventional millimeter wave imaging apparatus is provided with the lens that forms a millimeter wave image of a subject on the millimeter wave receiving surface of the millimeter wave sensor array. This is because, when the millimeter wave imaging apparatus is installed away from the subject, it becomes possible to capture an image of the subject from above or side thereof. However, the conventional millimeter wave imaging apparatus as above is not suitable for imaging the subject from below thereof, and therefore, cannot be used, for example, to inspect shoe soles of passengers at an airport and the like.

The present invention, which has been made in view of the problem, has an objective to provide a millimeter wave imaging apparatus that can image a subject from below thereof and detect goods hidden in a bottom part of the subject from the captured image.

### MEANS FOR SOLVING THE PROBLEMS

A millimeter wave imaging apparatus according to a first aspect of the invention made to accomplish the objective includes: an imaging device provided with a plurality of millimeter wave sensors that are arranged in a planar manner and receive millimeter waves radiated from a subject to detect signal levels thereof; an image data generation device that generates image data of the subject based on an output from each of the millimeter wave sensors constituting the imaging device; and a case that has a placement surface on which the subject can be placed and which permits transmission of millimeter waves. The imaging device is arranged below the placement surface of the case, so that the millimeter waves radiated from a bottom part of the subject placed on the placement surface of the case are received by the plurality of millimeter wave sensors.

A millimeter wave imaging apparatus according to a second aspect of the invention is constituted such that the case is provided with a placement sensor which detects that the subject is placed on the placement surface, and the image data generation device makes the imaging device operate, when the placement sensor detects placement of the subject, to receive the output from the each of the millimeter wave sensors, thereby to generate the image data, in the millimeter wave imaging apparatus according to the first aspect.

Next, a millimeter wave imaging apparatus according to a third aspect of the invention includes: a storage device that stores inspection target object data indicating a shape of an object to be the inspection target object; a detection device that compares the inspection target object data stored by the storage device and the image data generated by the image data generation device, thereby to detect an inspection target object hidden in the bottom part of the subject; and an output device that outputs results of detection by the detection device, in the millimeter wave imaging apparatus according to the first or second aspect.

### EFFECTS OF THE INVENTION

The millimeter wave imaging apparatus in the first aspect of the present invention includes a case which has a placement surface on which a subject can be placed and which permits transmission of millimeter waves. The imaging device for capturing a millimeter wave image is arranged below the placement surface of the case.

In view of the above, the millimeter wave imaging apparatus of the invention makes it possible to image a bottom part of the subject by using millimeter waves. Therefore, it becomes possible to find an inspection target object hidden in the bottom part of the subject from the captured image.

Accordingly, the millimeter wave imaging apparatus of the invention is suitable for, for example, the following use: the millimeter wave imaging apparatus is installed on a floor at an airport and the like, and used to inspect whether or not an inspection target object is hidden in shoe soles of passengers; or the millimeter wave imaging apparatus is installed on a placement table on which baggage is placed, and used to inspect whether or not an inspection target object is hidden in a bottom part of the baggage. As a result of using the millimeter wave imaging apparatus of the invention, more effective functioning of security check done at an airport and the like can be achieved.

Next, the millimeter wave imaging apparatus in the second aspect of the invention includes a placement sensor which detects that the subject is placed on the placement surface of the case. When the placement sensor detects placement of the subject, the image data generation device makes the imaging device operate to receive the output from the each of the millimeter wave sensors, thereby to generate the image data.

Thus, according to the millimeter wave imaging apparatus in the second aspect of the invention, the imaging device and the image data generation device can be operated only when the subject is placed on the placement surface of the case. As a result, an imaging operation of the millimeter wave imaging apparatus is minimized, thereby allowing reduction in consumption of electric power.

Further, the millimeter wave imaging apparatus in the third aspect of the invention includes a storage device that stores inspection target object data indicating a shape of an object to be an inspection target object. The detection device compares the inspection target object data stored by the storage device and the image data generated by the image data generation device, thereby to detect an inspection target object hidden in a bottom part of the subject. The output device outputs results of detection of the inspection target object by the detection device.

Therefore, according to the millimeter wave imaging apparatus in the third aspect of the invention, when the inspection target object data indicating the shape of the object to be the inspection target object is stored by the storage device, the inspection target object can be automatically detected, and results of detection can be notified to an inspector. As a result, it can be achieved to improve usability of the millimeter wave imaging apparatus when used as an inspection apparatus that inspects a bottom part of the subject.

### BRIEF DESCRIPTION OF THE DRAWINGS

FIG. 1 is an explanatory view showing an outer appearance and a use state of a millimeter wave imaging apparatus in an embodiment.
FIG. 2 is a block diagram showing a configuration of the entire millimeter wave imaging apparatus.
FIG. 3 is an explanatory view showing a configuration of a millimeter wave sensor.
FIG. 4 is a flowchart showing an inspection process executed by an image processing unit,

### DESCRIPTION OF REFERENCE NUMERALS

2...subject (shoe sole), 4...inspection target object, 10...millimeter wave imaging apparatus, 12...case, 12a...placement surface, 14...imaging unit, 16...indicator, 18...millimeter wave sensor, 20...millimeter wave sensor array, 22...pressure sensor, 24...input unit, 26...drive unit, 30... image processing unit, 42...receiving antenna, 44...LNA (Low Noise Amplifier), 46...BPF (Band Pass Filter), 48...detector circuit.

### BEST MODE FOR CARRYING OUT THE INVENTION

An embodiment of the present invention will hereinafter be described.

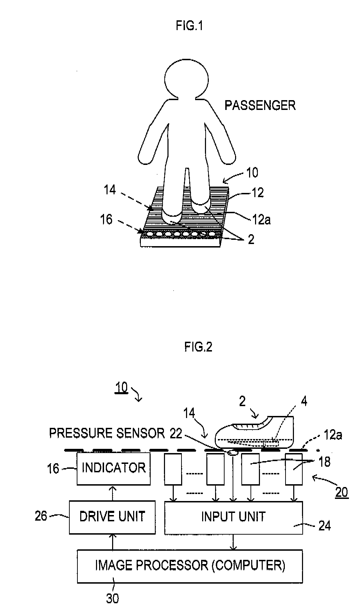

Fig. 1 is an explanatory view showing an outer appearance of a millimeter wave imaging apparatus 10 to which the invention is applied. Fig. 2 is a block diagram showing a configuration of the millimeter wave imaging apparatus 10.

The millimeter wave imaging apparatus 10 of the present embodiment is used to check whether or not a passenger hides a dangerous object (an inspection target object 4) in shoe soles or a bottom of baggage at an airport and the like. The millimeter wave imaging apparatus 10 includes a flat case 12 having strength sufficient for the passenger, without taking off their shoes, to step on and off the case 12. The millimeter wave imaging apparatus 10 is configured to store various functional components within the case 12.

An upper face (a placement surface on which a person steps on or baggage is placed) 12a of the case 12 is constituted of resin or glass which permits transmission of millimeter waves. An imaging unit 14 for imaging shoe soles of a passenger as a subject is provided on a substantially entire area of an opposite side of the placement surface 12a. At one end portion of the opposite side, an indicator 16 is provided. When the inspection target object 4 such as a knife hidden in a shoe sole has been detected, the indicator 16 notifies that the inspection target object has been detected.

The imaging unit 14 includes a millimeter wave sensor array 20 and a pressure sensor 22. The millimeter wave sensor array 20 is constituted of a plurality of millimeter wave sensors 18 arranged in a planar manner along the placement surface 12a of the case 12. The pressure sensor 22 detects that a person or an object is placed on the placement surface 12a, based on receipt of a pressure from the placement surface 12a.

Outputs from the millimeter wave sensors 18 constituting the millimeter wave sensor array 20 and a detection signal from the pressure sensor 22 are inputted to an image processing unit 30 via an input unit 24.

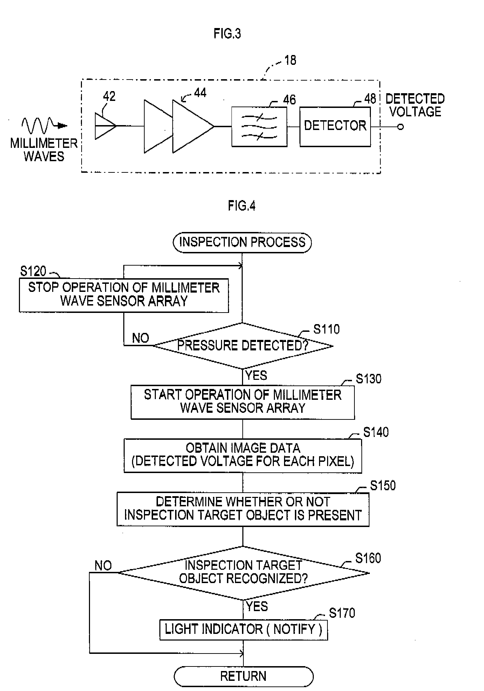

As shown in FIG. 3, the millimeter wave sensor 18 includes: a receiving antenna 42 for receiving millimeter waves; a low noise amplifier (LNA) 44 that amplifies a received signal from the receiving antenna 42; a band pass filter (BPF) 46 that selectively allows passage of a received signal of a predetermined frequency band (for example, a 75-GHz band) suitable for detection of the inspection target object 4 among received signals amplified by the LNA 44; and a detector circuit 48 that detects the received signal which has passed the BPF 46 and detects a signal level thereof.

Accordingly, each of the millimeter wave sensors 18 constituting the millimeter wave sensor array 20 outputs a detected voltage in accordance with a signal level of a millimeter wave received at each receiving point. The image processing unit 30 sequentially receives detected voltages from the respective millimeter wave sensors 18 through the input unit 24 to generate image data of a subject 2 on the placement surface 12a.

Also, the image processing unit 30 is constituted by a computer having an image processing function. The image processing unit 30 not only generates the image data of the subject 2 as explained above, but also processes the generated image data to determine whether or not the inspection target object 4 is hidden in a shoe sole as the subject 2. If the inspection target object 4 is hidden, the image processing unit 30 drives the indicator 16 via a drive unit 26, thereby to notify to the surroundings that the inspection target object 4 is hidden.

In the present embodiment, the indicator 16 is constituted of a plurality of light emitting diodes arranged substantially in one line. The image processing unit 30 lights up the light emitting diodes in the indicator 16 via the drive unit 26, thereby to notify that the inspection target object 4 is hidden in the shoe sole as the subject 2.

Hereinafter, an inspection process executed by the image processing unit 30 in order to generate the image data in the above manner and detect the inspection target object 4, will be described using the flowchart shown in FIG. 5.
As shown in FIG. 5, in this inspection process, first it is determined in S110 (S means a step), based on a detection signal from the pressure sensor 22, whether or not a pressure greater than or equal to a predetermined pressure is detected by the pressure sensor 22, in other words, whether or not a passenger (or baggage) is placed on the placement surface 12a.

Then, when it is determined in S110 that the pressure greater than or equal to the predetermined pressure has not been detected by the pressure sensor 22, the present process proceeds to S120 to interrupt supply of electric power to the millimeter wave sensor array 20, thereby to stop an operation of the millimeter wave sensor array 20. Thereafter, the present process proceeds to S110 again.

On the other hand, when it is determined in S110 that the pressure greater than or equal to the predetermined pressure has been detected by the pressure sensor 22, it is assumed that the passenger (or the baggage) as an object to be inspected is placed on the placement surface 12a. Accordingly, the present process proceeds to S130 so as to start supply of electric power to the millimeter wave sensor array 20, thereby activating the respective millimeter wave sensors 18 constituting the millimeter wave sensor array 20. Then, the process proceeds to S140.

In S140, detected voltages are received from the respective millimeter wave sensors 18 via the input unit 24, to generate image data in which the respective detected voltages are used as pixel values. The image data generated in S140 is used in the subsequent S150 onwards to determine whether or not the inspection target object 4 is present. In addition, the image data is outputted to a not-shown external device (e.g., display device, storage device, computer, etc.) connected to the image processing unit 30.

When the image data is generated as above, the process proceeds to S150. In S150, it is determined whether or not an image having substantially the same shape as any of the inspection target objects 4 is present in the image captured this time by searching the image data based on data of shapes of the inspection target objects 4 previously stored in a nonvolatile memory (ROM, EEPROM, etc.) included in the image processing unit 30.

In subsequent S160, it is determined whether or not an image of the inspection target object 4 is recognized to be present in the captured image. When an image of the inspection target object 4 is not recognized, the present process is temporarily terminated, and the process proceeds to S110 again. On the other hand, when an image of the inspection target object 4 is recognized, the process proceeds to S170. In S170, the indicator 16 is lit for a certain period of time via the drive unit 26, so as to notify to the surroundings that the inspection target object 4 is hidden in the shoe sole of the passenger. Then, the process proceeds to S110 again.

As explained above, in the millimeter wave imaging apparatus 10 of the present embodiment, the millimeter wave sensor array 20 for capturing a millimeter wave image is arranged below the placement surface 12a of the case 12, Thereby, it is possible to image shoe soles of a passenger on the placement surface 12a by using the plurality of millimeter wave sensors 18 constituting the millimeter wave sensor array 20. Thus, according to the millimeter wave imaging apparatus of the present embodiment, it is possible to find the inspection target object hidden in the passenger's shoe sole, etc, from the captured image.

Moreover, in the millimeter wave imaging apparatus 10 of the present embodiment, the pressure sensor 22 is provided below the placement surface 12a of the case 12. When a pressure from a passenger (or baggage) on the placement surface 12a is applied to the pressure sensor 22, the image processing unit 30 detects that the pressure has been applied, and then activates the millimeter wave sensor array 20.

As above, according to the millimeter wave imaging apparatus 10 of the present embodiment, it is possible to inhibit consumption of electric power by normally setting the entire apparatus in a waiting state. Also, by setting the entire apparatus to a normal operation state when a passenger and the like steps on the placement surface 12a of the case 12, it is possible to image the subject 2 and detect the inspection target object.

Moreover, the millimeter wave imaging apparatus 10 of the present embodiment, not only images the subject 2 on the placement surface 12a of the case 12, but also detects the inspection target object 4 hidden in the subject 2 from the captured image to notify results of detection to the surroundings. Thereby, it becomes possible to assist an inspector who monitors whether or not there is the inspection target object 4 while watching the captured image. Thus, an improved usability of the apparatus 10 for the inspector can be achieved.

In the present embodiment, the millimeter wave sensor array 20 corresponds to an imaging device of the invention; the processings in S110-S140 executed by the image processing unit 30 correspond to an image data generation device of the invention; the pressure sensor 22 corresponds to a placement sensor of the invention; the nonvolatile memory included in the image processing unit 30 corresponds to a storage device of the invention; the processings in S150 and S160 executed by the image processing unit 30 correspond to a detection device of the invention; and the indicator 16 and the processing in S170 correspond to an output device of the invention.

Although one embodiment of the present invention has been described above, the invention should not be limited to the above embodiment, but can be practiced in various manners without departing from the scope of the invention.

## Claims

1. A millimeter wave imaging apparatus comprising:
an imaging device including a plurality of millimeter wave sensors that are arranged in a planar manner and receive millimeter waves radiated from a subject to detect signal levels thereof;
an image data generation device that generates image data of the subject based on an output from each of the millimeter wave sensors constituting the imaging device; and
a case that includes a placement surface on which the subject can be placed and which permits transmission of millimeter waves; and
wherein the imaging device is arranged below the placement surface of the case, so that the millimeter waves radiated from a bottom part of the subject placed on the placement surface of the case are received by the plurality of millimeter wave sensors.

2. The millimeter wave imaging apparatus according to claim 1,
wherein the case is provided with a placement sensor which detects that the subject is placed on the placement surface, and
wherein the image data generation device makes the imaging device operate, when the placement sensor detects placement of the subject, to receive the output from the each of the millimeter wave sensors, thereby to generate the image data.

3. A millimeter wave imaging apparatus comprising:
a storage device that stores inspection target object data indicating a shape of an object to be the inspection target object;
a detection device that compares the inspection target object data stored by the storage device and the image data generated by the image data generation device, thereby to detect an inspection target object hidden in the bottom part of the subject; and
an output device that outputs results of detection by the detection device.
